**Europäisches Patentamt**

**European Patent Office**

**Office européen des brevets**

(11) Veröffentlichungsnummer: **0 023 331**
**B1**

(12) **EUROPÄISCHE PATENTSCHRIFT**

(45) Veröffentlichungstag der Patentschrift:
**20.07.83**

(51) Int. Cl.³: **H 04 L 7/04,** H 04 Q 11/04,
H 04 J 3/06

(21) Anmeldenummer: **80104259.9**

(22) Anmeldetag: **18.07.80**

(54) **Schaltungsanordnung zur Synchronisierung einer untergeordneten Einrichtung, insbesondere einer digitalen Teilnehmerstation, durch eine übergeordnete Einrichtung, insbesondere eine digitale Vermittlungsstelle eines PCM-Fernmeldenetzes.**

(30) Priorität: **27.07.79 DE 2930586**

(43) Veröffentlichungstag der Anmeldung:
**04.02.81 Patentblatt 81/5**

(45) Bekanntmachung des Hinweises auf die Patenterteilung:
**20.07.83 Patentblatt 83/29**

(84) Benannte Vertragsstaaten:
**FR GB SE**

(56) Entgegenhaltungen:
**EP-A-0 009 586**
**DE-A-2 835 605**
**DE-A-2 841 855**

(73) Patentinhaber: **SIEMENS AKTIENGESELLSCHAFT, Berlin und München Wittelsbacherplatz 2, D-8000 München 2 (DE)**

(72) Erfinder: **Wintzer, Klaus, Willibaldstrasse 16 f, D-8000 München 21 (DE)**
Erfinder: **Zemanek, Josef, Dipl.-Ing., Aidenbachstrasse 144 a, D-8000 München 71 (DE)**
Erfinder: **Von Sichart, Frithjof, Dr., Karl-Theodor-Strasse 72, D-8000 München 40 (DE)**

Schaltungsanordnung zur Synchronisierung einer untergeordneten Einrichtung, insbesondere einer digitalen Teilnehmerstation, durch eine übergeordnete Einrichtung, insbesondere eine digitale Vermittlungsstelle eines PCM-Fernmeldenetzes

Die Erfindung betrifft eine Schaltungsanordnung zur Synchronisierung einer untergeordneten Einrichtung, insbesondere einer digitalen Teilnehmerstation, durch eine übergeordnete Einrichtung, insbesondere durch eine digitale Vermittlungsstelle eines PCM-Fernmeldenetzes, bei der Übertragung von digitalen Signalen in Form von Nachrichtensignalblöcken, die ein vorangestelltes Synchronwort, dessen erstes Bit immer denselben Wert beibehält, das jedoch durch wechselnde Bitkombinationen wenigstens den Anfang eines mehrere Empfangs-/Sendeperioden solcher Nachrichtensignalblöcke beinhaltenden Überrahmes kennzeichnet, ferner gegebenenfalls der Signalisierung dienende Bits sowie mindestens ein Nachrichtensignalwort umfassen, wobei die Synchronisierung aufgrund der Auswertung solcher einem Synchronisierwort gleichender Bitkombinationen, die zusammen mit einem Kriterium auftreten, das das erste Bit dieser Kombination als den Anfang eines Nachrichtensignalblockes aufweist, erfolgt.

Durch das erwähnte Kriterium kann gewährleistet werden, dass Nachrichtensignalbitkombinationen, die denjenigen des Synchronisierwortes gleichen und die gewöhnlich über längere Zeitspannen hinweg auftreten, nicht zu Fehlsynchronisierungen führen. Wenn die digitalen Nachrichtensignale der Nachrichtensignalblöcke bei der Übertragung durch Signalgrössen dargestellt werden, die von dem während der Übertragungspausen herrschenden Signalzustand unterscheidbar sind, dann lässt sich ein solches Kriterium empfangsseitig aus den Nachrichtensignalblöcken selbst in Form eines Empfangssteuersignals ableiten, das die zeitliche Lage des Nachrichtensignalblockes kennzeichnet und auch dessen Länge angibt.

Wenn, wie dies häufig der Fall ist, zur Nachrichtensignalbitdarstellung ein sogenannter AMI-Code (alternate mark inversion) verwendet wird, bei dem die Binärwerte «1» abwechselnd durch Impulse mit positiver und negativer Spannung und die Binärwerte «0» durch die Spannung 0 angegeben werden, besteht die Möglichkeit der Erzeugung eines solchen Empfangssteuersignals allerdings nicht.

Es ist daher vorgeschlagen worden (EP-A-00 09 586, veröffentlicht am 16.4.80), in der Synchronisierphase die Synchronisiereinrichtung für ihren Betrieb im Zusammenhang mit einer Neusynchronisierung erst dann freizugeben, wenn ein vom Sende-/Empfangstakt weitergeschalteter Zähler, der durch jedes empfangene Bit desjenigen Binärwerts, den das erste Bit eines Synchronisierwortes aufzuweisen hat, in seinen Zähleranfangsstand zurückgestellt wird, einen Zählerstand erreicht hat, der mindestens der Summe der Bitzeitspannen entspricht, über die hinweg in einem Nachrichtensignalblock nacheinander Bits des anderen Binärwerts auftreten können und bei dessen Erreichen ein Weiterzählen verhindert wird. Beim sogenannten HD3-Code ist gewährleistet, dass nicht mehr als drei Bits vom Binärwert «0» nacheinander in einem Nachrichtensignal auftreten. Wenn also beim vorgeschlagen Verfahren der markante Zählerstand des erwähnten Zählers einer grösseren Zeitspanne als drei Bitzeitspannen entspricht, wird der Zähler, der durch ein «1»-Bit eines Nachrichtensignalblocks in seinen Zähleranfangsstand gestellt worden war, während der Dauer dieses Nachrichtenblocks seinen Zählerstand nicht erreichen können, da er zwischenzeitlich immer wieder zurückgestellt wird. Der Zählerendstand wird vielmehr erst in der Pause zwischen dem Empfang zweier Nachrichtensignalblöcke erreicht sein, so dass, das Fehlen von Störungen innerhalb einer solchen Pause vorausgesetzt, eine Neusynchronisierung tatsächlich erst aufgrund des Auftretens des Synchronisierwortes am Anfang des nachfolgenden Nachrichtensignalblockes erfolgen kann. Wenn die Freigabe der Synchronisiereinrichtung bei einem Zählerstand des Zählers erfolgt, der einer nahezu so lange wie die Pause zwischen dem Empfang zweier Nachrichtensignalblöcke dauernden Zeitspanne entspricht, ist sichergestellt, dass auch gegebenenfalls während der Pause auftretende Störungen nicht zu einem falschen Aufsynchronisieren führen können.

Bei der eingangs erwähnten Betriebsweise hat das erste Bit des am Blockanfang gesendeten Synchronisierwortes zwar immer denselben Binärwert, ein zweites Bit oder gegebenenfalls weitere Bits wechseln jedoch ihren Binärwert je nach den besonderen Gegebenheiten nach einer oder mehreren Übertragungsperioden. Hierdurch wird ein im einfachsten Falle zwei Übertragungsperioden umfassender Überrahmen gekennzeichnet, wodurch es möglich ist, ausser den eigentlichen Nachrichtensignalworten in solchen Nachrichtensignalblöcken noch enthaltene Signalisierbits zu Signalisierworten zusammenzufassen.

Aufgabe der vorliegenden Erfindung ist es nun, im Hinblick auf die geschilderten Voraussetzungen eine Synchronisierschaltung auzugeben, mit deren Hilfe Nachrichtensignalblockanfänge und damit richtige Synchronisierwörter sicher erkannt werden können, wobei zumindest die Anfänge der Überrahmen feststellbar sein sollen, die Synchronisierung sich bei möglichst geringen Synchronisierzeiten erzielen lässt, und Einzelstörungen weitgehend unwirksam bleiben. Die Schaltung soll aufgrund solcher Störungen weder während der Synchronisierphase eine Neusynchronisation vornehmen, noch während der Synchronbetriebsphase einen neuen Suchvorgang nach einem Synchronisierwort einleiten.

Diese Aufgabe wird bei einer Schaltungsanordnung der eingangs erwähnten Art erfindungsgemäss dadurch gelöst, dass die untergeordnete Einrichtung ein Empfangsschieberegister mit wenigstens der Anzahl der Bits eines Synchronisierwortes gleicher Stufenzahl aufweist, über dessen dem Serieneingang abgewendete letzte, den Bits des Synchronisierwortes zugeordnete Stufen während einer Synchronisierphase empfangene Bits an eine Betriebsartsteuerung gelangen, in der sie bei Koinzidenz mit dem erwähnten Kriterium für einen Nachrichtensignalblockempfang ausgewertet werden und die, sofern deren erstes den Binärwert des ersten Bits eines richtigen Synchronisierwortes aufweist, die Einstellung eines Stationszählers, der die Sende- und Empfangsperioden der untergeordneten Einrichtung bestimmt, in den Zähleranfangsstand und, sofern darüber hinaus deren übrige Bits denselben Binärwert wie die übrigen Bits eines richtigen Synchronisierwortes aufweisen, die Einstellung eines die Überrahmenperioden bestimmenden Überrahmenzählers in den der Gesamtbitkombination entsprechenden Zählerstand bewirken, dass an die den Bits des Synchronisierwortes zugeordneten Stufen des Empfangsschieberegisters ein Vergleicher angeschlossen ist, der in einer Synchronbetriebsphase jeweils zu den vom Stationszähler angegebenen ersten beiden Bitzeitspannen der von ihm bestimmten Empfangsperiode den Inhalt dieser Stufen mit von einem Synchronwortgeber gelieferten Bitmustern vergleicht, deren Wechsel vom Überrahmenzähler bestimmt wird und die die Überrahmenperiode, sowie bei ausreichend grosser Bitanzahl die einzelnen Übertragungsperioden innerhalb derselben bezeichnen, dass an den Ausgang des Vergleichers eine Auswerteschaltung angeschlossen ist, die in der Synchronisierphase die bei positivem Vergleichsergebnis ihr zugeführten Ergebnissignale als Zählimpulse und die bei negativem Vergleichsergebnis ihr zugeführten Ergebnissignale als Rückstellimpulse an einen Zähler weitergibt und die in der Synchronbetriebsphase die bei negativem Vergleichsergebnis ihr zugeführten Ergebnissignale als Zählimpulse an diesen Zähler weitergibt, dass der Zähler bei Erreichen eines bestimmten Zählerstandes in der Synchronisierphase ein Signal an die Betriebsartsteuerung liefert, aufgrund dessen diese die Synchronbetriebsphase herstellt, in der unabhängig von den Vergleichsergebnissen der Stationszähler und der Überrahmenzähler unbeeinflusst bleiben, und dass der Zähler in der Synchronbetriebsphase jeweils nach einer vorgegebenen Anzahl von Übertragungsperioden, sofern er nicht mehr seinen Zähleranfangsstand innehat, um eine Zählerstellung zurückgestellt wird und, sofern dennoch ein bestimmter Zählerstand erreicht wird, ein Signal an die Betriebsartsteuerung abgibt, aufgrund dessen wieder die Synchronisierphase hergestellt und die Informationsaussendung und die Informationsempfang durch übrige Teile der untergeordneten Einrichtung bis zu Beginn der nächsten Synchronbetriebphase unterbunden werden.

Bei der erfindungsgemässen Schaltungsanordnung ist also einerseits gewährleistet, dass Nachrichtensignalbits in Bitkombinationen eines richtigen Synchronisierwortes nur dann ausgewertet werden können, wenn sie am Anfang eines Nachrichtensignalblockes auftreten. Es wird ferner gewährleistet, dass der Übergang von der Synchronisierphase, in der die Aufprüfung auf eine solche Bitkombination unabhängig vom Stand des Stationszählers und Überrahmenzählers in der untergeordneten Einrichtung erfolgt, erst dann vonstattengeht, wenn ein richtiges Synchronisierwort am Anfang mehrerer aufeinander folgender Empfangsperioden empfangen worden ist, und schliesslich ist sichergestellt, dass eine Störung des Synchronisierwortes während der Synchronbetriebsphase erst dann einen Übergang in eine Synchronisierphase bewirkt, wenn sie sich innerhalb einer vorgegebenen Anzahl von Übertragungsperioden mehrfach wiederholt hat.

Nachstehend wird die Erfindung anhand eines Ausführungsbeispiels unter Bezugnahme auf eine Figur näher erläutert.

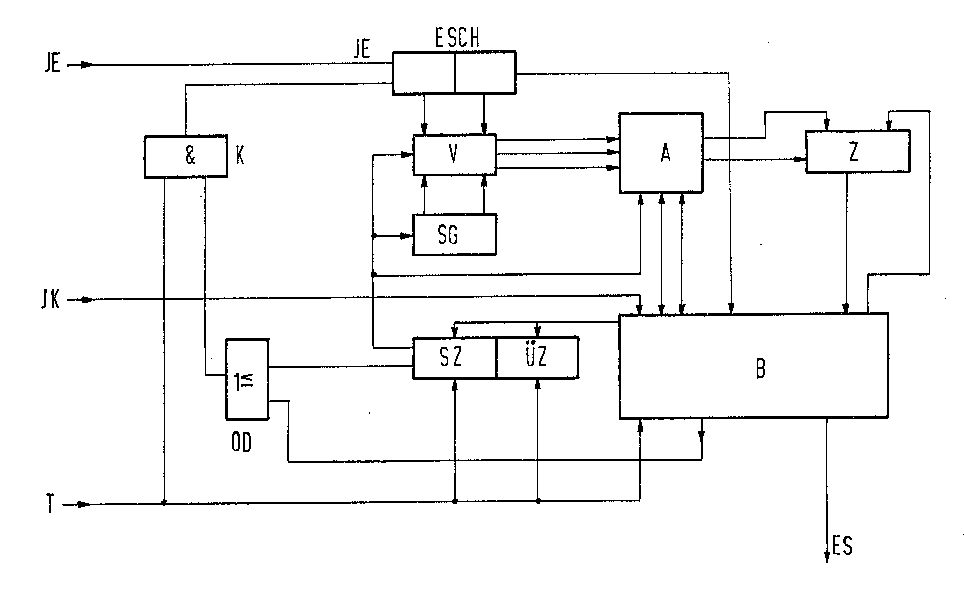

Die Figur zeigt die Synchronisierschaltung sowie einige weitere Bestandteile einer untergeordneten Einrichtung, der von einer übergeordneten Einrichtung her Nachrichtensignalblöcke der eingangs erwähnten Art zugeführt werden, und die auf die Zeitverhältnisse der übergeordneten Einrichtung aufsynchronisiert werden soll.

Zu der eigentlichen Synchronisierschaltung gehört ein Empfangsschieberegister ESCH, an dessen Serieneingang JE solche Nachrichtensignalblöcke gelangen und das unter der Voraussetzung von zwei Bit umfassenden Synchronisierwörtern zwei Schieberegisterstufen aufweist. Über dieses Empfangsschieberegister gelangen in der Synchronisierphase, in der nach einem richtigen Synchronisierwort gesucht wird, empfangene Bits der Nachrichtensignalblöcke an eine Betriebsartsteuerung B, der unter anderem über den Eingang JK auch das erwähnte Kriterium zugeführt wird, das eine Angabe darüber liefert, ob ein empfangenes Bit bzw. eine Bitkombination den Anfang eines Nachrichtensignalblockes bildet. Nur bei Vorliegen dieses Kriteriums werden solche an die Betriebsartsteuerung gelangenden Bits daraufhin ausgewertet, ob sie denselben Binärwert wie das erste Bit eines richtigen Synchronisierwortes aufweisen bzw. ob ihre Bitkombination ein richtiges Synchronisierwort darstellt. In der Praxis weist dieses erste Bit eines richtigen Synchronisierwortes den Binärwert «1» auf und umfasst einen Überrahmen mit vier Sende-/Empfangsperioden, dessen Anfang durch die Bitkombination 1 1 gekennzeichnet ist, wogegen während der drei übrigen Perioden des Überrahmes das Synchronisierwort die Bitkombination 1 0 aufweist.

Wenn also das erste der aus dem Empfangsschieberegister ESCH aufgenommen Bit den Binärwert 1 hat, wird auf jeden Fall der Stationszähler SZ, der innerhalb der untergeordneten Einrichtung, deren Bestandteil die beschriebene Synchronisierschaltung ist, die Übertragungsperioden bestimmt, in seinem Zähleranfangsstand gestellt. Weist auch das zweite Bit den Binärwert 1 auf, dann erfolgt auch eine Einstellung des die Überrahmenperiode bestimmenden Überrahmenzählers ÜZ in den Zähleranfangsstand.

In Fällen, in denen ein Überrahmen nur zwei Übertragungsperioden umfasst oder in denen das Synchronisierwort so viele Bits umfasst wie erforderlich sind, um unter Beibehaltung immer desselben Binärwertes für das erste Bit jede Übertragungsperiode innerhalb des Überrahmens gesondert zu kennzeichnet und der Überrahmenzähler ÜZ die entsprechenden Einstellmöglichkeiten besitzt, kann auch eine Einstellung desselben direkt auf den Zählerstand erfolgen, der der empfangenen Bitkombination entspricht.

Die Einstellung des Stationszählers SZ hat auf jeden Fall zur Folge, dass der Durchlauf von Informationen durch das Empfangsschieberegister entsprechend dem am Eingang T zugeführten Takt nunmehr lediglich noch während der Empfangsperioden vor sich geht. Während nämlich der Schiebetakt für das Empfangsschieberegister, der durch die über das Koinzidenzglied K erfolgende Verknüpfung des Taktsignals am Eingang T mit dem Ausgangssignal des ODER-Gliedes OD entsteht, zunächst, solange die Betriebsartsteuerung ein Eingangssignal für das ODER-Glied geliefert hatte, unabhängig von der Zählerstellung des Stationszählers war, kann, da dieses Eingangssignal von der Betriebsartsteuerung her weggefallen ist, ein Schiebetakt nunmehr lediglich dann geliefert werden, wenn der Stationszähler ein Eingangssignal für das ODER-Glied liefert, was solange der Fall ist, wie das Synchronwort andauert.

Wenn bei der erwähnten Auswertung durch die Betriebsartsteuerung B bei zwei Bits der Binärwert 1 festgestellt worden ist, also sowohl der Stationszähler SZ als auch der Überrahmenzähler ÜZ in den Zähleranfangsstand gestellt worden sind, dann wird beim nächsten Vergleich der im Empfansschieberegister stehenden Bits mit einem von einem Synchronwortgeber SG gelieferten Bitmuster durch einen Vergleicher V ein positives Vergleichsergebnis festgestellt werden. Im anderen Falle liefert der Vergleicher gegebenenfalls noch mehrmals ein negatives Vergleichsergebnis, bis tatsächlich die Bitkombination 11 zur Auswertung kommt.

Mit Hilfe einer Auswerteschaltung A und eines Kontrollzählers Z, die weitere Bestandteile der Synchronisierschaltung sind, wird festgestellt, ob in mehreren, beispielsweise drei aufeinander folgenden Empfangsperioden ein positives Vergleichsergebnis vorliegt. Die Auswerteschaltung A gibt hierzu vom Vergleicher im Falle eines positiven Vergleichsergebnisses abgegebene Signale als Zähltakte und im Falle eines negativen Vergleichsergebnisses gelieferte Signale als Rückstellsignale an den Kontrollzähler Z weiter. Dieser kann also nur im Falle der mehrmaligen direkten Aufeinanderfolge eines richtigen Vergleichsergebnisses seinen vorgegebenen Zählerstand erreichen, indem er an die Betriebsartsteuerung B ein Signal abgibt. Aufgrund eines solchen Signals bewirkt die Betriebsartsteuerung den Übergang von der beschriebenen Synchronisierphase in die Synchronbetriebsphase. In dieser Betriebsphase liefert die Betriebsartsteuerung ein Ausgangssignal ES, das den Empfang und die Aussendung von Nachrichtensignalblöcken von andern, hierzu bestimmten Teilen der betrachteten untergeordneten Einrichtung, die bisher unterbunden waren, freigibt.

Die Betriebsartsteuerung beeinflusst die erwähnte Auswertung dann auch in der Weise, dass diese nunmehr im Falle eines negativen Vergleichsergebnisses vom Vergleicher V abgegebenen Ergebnissignale als Zähltakte an den Zähler Z weitergibt. Nach einer bestimmten Anzahl von Übertragungsperioden im Verlaufe der Synchronbetriebsphase wird der Zähler, sofern er seinen Zähleranfangsstand verlassen hat, um einen Zählerstand zurückgestellt. Wenn er trotzdem einen vorgegebenen Zählerstand, beispielsweise ebenfalls den dritten Zählerstand erreicht hat, dann wird wiederum an die Betriebsartsteuerung ein Signal abgegeben, das einen Übergang von der Synchronbetriebsphase in die Synchronisierphase bewirkt. Durch den letzterwähnten Betrieb des Zählers Z ist gewährleistet, dass Störungen des Synchronisierwortes, die sich innerhalb der vorgegebenen Zeitspanne nicht bis zu der vorgegebenen Schwelle aufsummieren, keine Neusynchronisierung bewirken.

## Patentanspruch

Schaltungsanordnung zur Synchronisierung einer untergeordneten Einrichtung, insbesondere einer digitalen Teilnehmerstation, durch eine übergeordnete Einrichtung, insbesondere durch eine digitale Vermittlungsstelle eines PCM-Fernmeldenetzes, bei der Übertragung von digitalen Signalen in Form von Nachrichtensignalblöcken, die ein vorangestelltes Synchronisierwort, dessen erstes Bit immer denselben Wert beibehält, das jedoch durch wechselnde Bitkombinationen wenigstens den Anfang eines mehrere Empfangs- /Sendeperioden solcher Nachrichtensignalblöcke beinhaltenden Überrahmens kennzeichnet, ferner gegebenenfalls der Signalisierung dienende Bits sowie mindestens ein Nachrichtensignalwort umfassen, wobei die Synchronisierung aufgrund der Auswertung solcher einem Synchronisierwort gleichender Bitkombinationen, die zusammen mit einem Kriterium auftreten, das das erste Bit dieser Kombination als den Anfang eines Nachrichtensignalblockes ausweist, erfolgt, dadurch gekennzeichnet, dass die untergeordnete Einrichtung ein Empfangsschieberegister (ESCH) mit wenigstens der Anzahl der Bits eines Synchronisierwortes gleicher Stufenzahl aufweist, über dessen dem Serieneingang abgewendeten letzten, den Bits des Synchronisierwortes zugeordnete Stufen während einer Synchronisierphase empfangene Bits an eine Betriebsartsteuerung (B) gelangen, in der sie bei Koinzidenz mit dem erwähnten Kriterium für einen Nachrichtensignalblockanfang ausgewertet werden und die, sofern deren erstes den Binärwert des ersten Bits eines richtigen Synchronisierwortes aufweist, die Einstellung eines Stationszählers (SZ), der die Sende- und Empfangsperioden der untergeordneten Einrichtung bestimmt, in den Zähleranfangsstand und, sofern darüber hinaus deren übrige Bits denselben Binärwert wie die übrigen Bits eines richtigen Synchronisierwortes aufweisen, die Einstellung eines die Überrahmenperioden bestimmenden Überrahmenzählers (ÜZ) in den der gesamten Bitkombination entsprechenden Zählerstand bewirken, dass an die den Bits des Synchronisierwortes zugeordneten Stufen des Empfangsschieberegisters (ESCH) ein Vergleicher (V) angeschlossen ist, der in einer Synchronbetriebsphase jeweils zu den vom Stationszähler (SZ) angegebenen ersten beiden Bitzeitspannen der von ihm bestimmten Empfangsperiode den innerhalb dieser Stufe mit von einem Synchronwortgeber (SG) gelieferten Bitmustern vergleicht, deren Wechsel vom Überrahmenzähler (ÜZ) bestimmt wird und die die Überrahmenperiode sowie bei ausreichend grosser Bitanzahl die einzelnen Übertragungsperioden innerhalb derselben bezeichnen, dass an den Ausgang des Vergleichers (V) eine Auswerteschaltung (A) angeschlossen ist, die in der Synchronisierphase die bei positivem Vergleichsergebnis ihr zugeführten Ergebnissignale als Zählimpulse und die bei negativem Vergleichsergebnis ihr zugeführten Ergebnissignale als Rückstellimpulse an einen Kontrollzähler (Z) weitergibt und die in der Synchronbetriebsphase die bei negativem Vergleichsergebnis ihr zugeführten Ergebnissignale als Zählimpulse an diesen Zähler weitergibt, dass der Zähler bei Erreichen eines vorbestimmten Zählerstandes in der Synchronisierphase ein Signal an die Betriebsartsteuerung (B) liefert, aufgrund dessen diese die Synchronbetriebsphase herstellt, in der unabhängig von den Vergleichsergebnissen sowohl der Stationszähler (SZ) als auch der Überrahmenzähler (ÜZ) unbeeinflusst bleiben, und dass der Kontrollzähler (Z) in der Synchronbetriebsphase jeweils nach einer vorgegebenen Anzahl von Übertragungsperioden, sofern er nicht mehr seinen Zähleranfangsstand innehat, um eine Zählerstellung zurückgestellt wird, und sofern dennoch ein bestimmter Zählerstand erreicht wird, ein Signal an die Betriebsartsteuerung (B) abgibt, aufgrund dessen wieder die Synchronisierphase hergestellt und Informationsaussendung und Informationsempfang durch übrige Teile der untergeordneten Einrichtung bis zu Beginn der nächsten Synchronbetriebsphase unterbunden werden.

## Revendication

Circuit pour la synchronisation d'un dispositif subordonné, notamment un poste d'abonné numérique, par un dispositif d'ordre supérieur, notamment par un central numérique d'un réseau de télécommunications PCM, lors de la transmission de signaux numériques sous la forme de blocs de signaux d'information qui comprennent un mot de synchronisation placé devant, dont le premier bit conserve toujours la même valeur mais qui caractérise cependant, par des combinaisons de bits variables, au moins le début d'une supertrame contenant plusieurs périodes de réception/émission de tels blocs de signaux d'information, et éventuellement en outre des bits servant à la signalisation ainsi qu'au moins un mot de signaux d'information, la synchronisation ayant lieu sur la base de l'évaluation de telles combinaisons de bits qui équivalent à un mot de synchronisation et qui apparaissent en même temps qu'un critère qui comporte le premier bit de cette combinaison en tant que début d'un bloc de signaux d'information, caractérisé par le fait que le dispositif subordonné comporte un registre à décalage de réception (ESCH), comprenant un nombre d'étages égal au moins au nombre des bits d'un mot de synchronisation, par l'intermédiaire du dernier étage, éloigné de l'entrée série et associé aux bits du mot de synchronisation, duquel des bits reçus pendant une phase de synchronisation arrivent à un dispositif de commande du type de fonctionnement (B) dans lequel ils sont évalués lors de la coïncidence avec le critère mentionné pour un début de bloc de signaux d'information et qui, dans la mesure où son premier bit possède la valeur binaire du premier bit d'un mot de synchronisation correct, règle un compteur de poste (SZ), qui détermine les périodes d'émission et de réception du dispositif subordonné, dans l'état de comptage initial et, dans la mesure où en outre ses autres bits possèdent la même valeur binaire que les autres bits d'un mot de synchronisation correct, règle un compteur de supertrame (ÜZ), qui détermine les périodes de supertrame, dans un état de comptage qui correspond à toute la combinaison de bits, qu'à l'étage du registre à décalage de réception (ESCH) qui est associé aux bits du mot de synchronisation est relié un comparateur (V) qui, dans une phase de fonctionnement synchrone, compare respectivement, aux deux premiers intervalles de temps de bit indiqués par le compteur de poste (SZ) de la période d'émission déterminée par celui-ci, le contenu de cet étage avec des profils binaires délivrés par un générateur de mots de synchronisation (SG), dont le changement est déterminé par le compteur de supertrame (ÜZ) et qui indiquent la période de supertrame ainsi que, dans le cas d'un nombre de bits suffisamment important, les périodes de transmission individuelles à l'intérieur de celle-ci, qu'à la sortie du comparateur (V) est relié un circuit d'évaluation (A) qui, dans la phase de synchronisation, délivre à un compteur de contrôle (Z) les signaux de résultat qui lui sont appliqués lors d'un résultat de comparaison positif sous la forme d'impulsions de comptage et les signaux de résultat qui lui sont appliqués lors d'un résultat de comparaison négatif sous la forme d'impulsions de remise dans l'état initial et qui, dans la phase de fonctionnement synchrone délivre à ce compteur les signaux de résultat qui lui sont appliqués lors d'un résultat de comparaison négatif sous la forme d'impulsions de comptage, que, lorsqu'un état de comptage prédéterminé est atteint dans la phase de synchronisation, ce compteur délivre au dispositif de commande du mode de fonctionnement (B) un signal sur la base duquel celui-ci établit la phase de fonctionnement synchrone dans laquelle, quels que soient les résultats de comparaison, ni le compteur de poste (SZ) ni le compteur de supertrame (ÜZ) ne sont influencés, et que dans la phase de fonctionnement synchrone le compteur de contrôle (Z) est reculé d'une position de comptage dans la mesure où il n'a plus son état de comptage initial, après respectivement un nombre prédéterminé de périodes de transmission et, dans la mesure où un état de comptage déterminé est néanmoins atteint, délivre au dispositif de commande du mode de fonctionnement (B) un signal sur la base duquel la phase de synchronisation est rétablie et l'émission d'informations et la réception d'informations par d'autres parties du dispositif subordoné sont interrompues jusqu'au début de la phase de fonctionnement synchrone suivante.

## Claim

Circuit arrangement for synchronising a sub-ordinate device, in particular a digital subscriber station, by means of a super-ordinate device, in particular a digital exchange within a PCM telecommunications network, during the transmission of digital signals in the form of message signal blocks which include a preceding synchronising word whose first bit always retains the same value but which, by virtue of changing bit combinations, characterises at least the start of a superframe which includes several receiving/transmitting periods of such message signal blocks, and further includes bits which may serve for signalling purposes and at least one message signal word, where the synchronisation is carried out on the basis of the analysis of such bit combinations which are equivalent to a synchronising word and which occur together with a criterion which features the first bit of this combination as the start of a message signal block, characterised in that the subordinate device has a receiving shift register (ESCH) which contains a number of stages which is at least equal to the number of bits within a synchronising word and via whose last stages, which are away from the series input and which are assigned to the bits of the synchronising word, bits received during a synchronising phase are fed to an operating mode control unit (B) in which they are evaluated in the event of coincidence with the aforementioned criterion for the start of a message signal block and which, provided the first bit thereof has the binary value of the first bit of a correct synchronising word, set a station counter (SZ) (which determines the transmitting and receiving periods of the sub-ordinate device) into the starting count and, if furthermore the other bits thereof have the same binary value as the other bits of a correct synchronising word, sets a superframe counter (ÜZ) (which serves to determine the superframe periods) into the count corresponding to the complete bit combination, that the stages of the receiving shift register (ESCH) which are assigned to the bits of the synchronising word are connected to a comparator (V) which, in a synchronous operating phase, during the first two bit intervals, determined by the station counter (SZ), of the receiving period which it has specified, compares the contents of these stages with bit patterns which are supplied by a synchronous word generator (SG) and the change in which is determined by the superframe counter (ÜZ) and which designate the superframe period and, when the number of bits is sufficiently high, the individual transmission periods therein, that the output of the comparator (C) is connected to an analysis circuit (A) which, in the synchronising phase, forwards the result signals, with which it is supplied in the event of a positive comparison result, as counting pulses and forwards the result signals with which it is supplied, in the event of a negative comparison result, as reset pulses to a control counter (Z) and which in the synchronous operating phase forwards the result signals, with which it is supplied in the event of a negative comparison result, as counting pulses to this counter, that when a predetermined count has been reached during the synchronising phase the counter supplies the operating mode control unit (B) with a signal on the basis of which the control unit establishes the synchronous operating phase in which, independently of the comparison results, both the station counter (SZ) and the superframe counter (ÜZ) remain unaffected, and that during the synchronous operating phase, following a predetermined number of transmission periods, if it no longer possesses its starting count the control counter (Z) is reset by one counter position and, if a specific count is nevertheless reached, supplies the operating mode control unit (B) with a signal on the basis of which the synchronising phase is re-established and the transmission and reception of information by other components of the sub-ordinate device are suppressed until the beginnig of the next synchronous operating phase.

0 023 331